# EUROPEAN PATENT APPLICATION

(11) **EP 4 821 714 A1**
(43) Date of publication of application: **14.10.2026**
(21) Application number: 24899462.6
(22) Date of filing: 12.10.2024
(51) Int. Cl.: B60H 1/30, B60H 1/28, B60R 13/07, B62D 25/08

(54) **VENTILATION COVER PLATE, FRONT COMPARTMENT DRAINAGE AND AIR-INTAKE SYSTEM, AND VEHICLE**

(30) Priority: 04.12.2023 CN 202311652572
(71) Applicant: Yinwang Intelligent Technologies Co., Ltd., Shenzhen, Guangdong 518110 (CN)
(72) Inventor: SUN, Liang, Shenzhen, Guangdong 518129 (CN); HU, Chengwen, Shenzhen, Guangdong 518129 (CN); LI, Yijie, Shenzhen, Guangdong 518129 (CN); HU, Wenlei, Shenzhen, Guangdong 518129 (CN)
(74) Representative: Henselmann, Alexander Gerhard
(86) International application number: PCT/CN2024/124453
(87) International publication number: WO 2025/118818

(57) **Abstract**

This application discloses a ventilation cover, a drainage and air intake system of a front compartment, and a vehicle, and pertains to the field of vehicle technologies. The ventilation cover includes a body portion and an enclosure portion. An opening and a first drainage outlet are spaced on the body portion. A bottom end of the enclosure portion is disposed around the opening and is connected to the body portion, a top end of the enclosure portion encloses an air inlet, the air inlet communicates with the opening to provide external air for an air conditioning system of the vehicle through the opening, and the bottom end is opposite to the top end. A plane on which at least a part of the air inlet is located is inclined relative to a plane on which the opening is located. The ventilation cover can prevent water from entering the air inlet, and increase an air intake area of the air inlet, to increase an air intake amount. When used in the vehicle, the ventilation cover can improve air intake performance of the air conditioning system.

## Description

This application claims priority to Chinese Patent Application No. 202311652572.3, filed on December 4, 2023 and entitled "VENTILATION COVER, DRAINAGE AND AIR INTAKE SYSTEM OF FRONT COMPARTMENT, AND VEHICLE", which is incorporated herein by reference in its entirety.

### TECHNICAL FIELD

This application relates to the field of vehicle technologies, and in particular, to a ventilation cover, a drainage and air intake system of a front compartment, and a vehicle.

### BACKGROUND

A drainage and air intake system of a front compartment is an important part of the front of a vehicle, and is generally arranged between a front windshield and an engine hood of the vehicle. The system is used to provide a sufficient air intake amount for an air conditioning system of the vehicle, to meet an air circulation requirement of an occupant compartment. In addition, the system is used for drainage, to guide water falling onto a vehicle roof and the front windshield of the vehicle to the outside of the vehicle for drainage.

The drainage and air intake system of the front compartment mainly includes a ventilation cover and a water gutter. The ventilation cover is generally provided with a drainage outlet communicating with the water gutter and an air inlet communicating with the air conditioning system. After the water on the front windshield and the vehicle roof of the vehicle falls onto the ventilation cover, the water usually flows into the water gutter through the drainage outlet, and is finally drained out of the vehicle. In a related technology, to prevent the water falling onto the ventilation cover from entering the air conditioning system and the occupant compartment through the air inlet, a small opening area of the air inlet is usually designed. However, this adversely affects air intake performance of an air conditioner.

### SUMMARY

This application provides a ventilation cover, a drainage and air intake system of a front compartment, and a vehicle. The ventilation cover can increase an air intake amount of an air inlet while preventing water from entering the air inlet, to improve air intake performance of an air conditioning system of the vehicle. Technical solutions are as follows.

According to a first aspect, this application provides a ventilation cover. The ventilation cover includes a body portion and an enclosure portion. An opening and a first drainage outlet are spaced on the body portion. A bottom end of the enclosure portion is disposed around the opening and is connected to the body portion, a top end of the enclosure portion encloses an air inlet, the air inlet communicates with the opening to provide external air for an air conditioning system of a vehicle through the opening, and the bottom end is opposite to the top end.

A plane on which at least a part of the air inlet is located is inclined relative to a plane on which the opening is located.

In the solution shown in this application, the enclosure portion is disposed around the opening on the body portion of the ventilation cover, and the top end of the enclosure portion encloses the air inlet. Because the plane on which the at least a part of the air inlet is located is inclined relative to the plane on which the opening is located, an opening area corresponding to the air inlet is greater than an opening area of the opening on the body portion.

A larger opening area means a larger air intake area. Therefore, in comparison with a solution in which the opening on the body portion is directly used as an air inlet in a related technology, the solution shown in this application can increase an air intake amount of the air inlet and improve air intake performance of the air conditioning system of the vehicle.

In addition, because the enclosure portion is disposed around the opening on the body portion, the air inlet enclosed by the top end of the enclosure portion is higher than a surface of the body portion. In other words, it is not easy for water flowing on the body portion to cross the enclosure portion and enter the air inlet, so that water can be prevented from entering the air inlet.

In a possible implementation, a height of a front end of the enclosure portion is less than a height of a rear end of the enclosure portion, the front end is opposite to the rear end, and the front end is farther away from a front windshield of the vehicle than the rear end.

In the solution shown in this application, water flowing from a vehicle roof and the front windshield of the vehicle sequentially passes the rear end and the front end of the enclosure portion. Therefore, the rear end of the enclosure portion usually faces more water than the front end. Making the height of the rear end of the enclosure portion greater than the height of the front end improves water blocking effect of the rear end, and effectively prevents water on the body portion from crossing the rear end of the enclosure portion and flowing into the air inlet.

In addition, when heights of the front end and the rear end of the enclosure portion are different, at least a part of the air inlet enclosed by the top end of the enclosure portion is inclined relative to the opening, so that an air intake area is increased.

In a possible implementation, a height of the enclosure portion gradually increases in a direction from the front end of the enclosure portion to the rear end of the enclosure portion.

In a possible implementation, the ventilation cover further includes a grid portion, the grid portion covers the air inlet and is connected to the top end of the enclosure portion, and the body portion, the enclosure portion, and the grid portion are an integrally formed structure.

In the solution shown in this application, the grid portion is further disposed at the air inlet, and is configured to prevent external impurities from entering the air conditioning system from the air inlet through the opening, to protect the air conditioning system. The body portion, the enclosure portion, and the grid portion are manufactured by using an integral formation process, to help improve structure strength of the ventilation cover while simplifying a manufacturing process of the ventilation cover.

In a possible implementation, the ventilation cover further includes a first dam, the first dam is connected to the body portion and divides the body portion into a first part and a second part that are isolated from each other, the opening and the enclosure portion are both located in the first part, and the first drainage outlet is located in the second part.

At least one end portion of the first dam is located at a side edge of the body portion and is spaced from a rear edge of the body portion, the side edge is an edge of the body portion on either side, and the rear edge is an edge that is of the body portion and that is close to the front windshield of the vehicle.

In the solution shown in this application, the body portion is connected to the first dam, and at least one end portion of the first dam extends to the side edge of the body portion, to divide the body portion into the first part and the second part that are isolated from each other. The air inlet is located in the first part, and the first drainage outlet is located in the second part. Water flowing from the front windshield of the vehicle first flows to the second part, stays in the second part under interception effect of the first dam, and is drained from the first drainage outlet. Therefore, it is not easy for water to flow into the first part, and it is further ensured that no water enters the air inlet.

In a possible implementation, the first dam runs through the body portion in a length direction of the body portion, and two end portions of the first dam are respectively located at two side edges of the body portion.

The first dam includes a first dam section, a second dam section, and a third dam section that are sequentially connected in the length direction, the second dam section extends in the length direction, and at least a part of the first dam section and at least a part of the third dam section extend in a width direction of the body portion.

There are at least two first drainage outlets, the at least two first drainage outlets are connected to the second dam section and are respectively located at locations close to the first dam section and the third dam section, and each first drainage outlet is spaced from the adjacent first dam section or the adjacent third dam section.

In the solution shown in this application, the first dam runs through the body portion in the length direction of the body portion, and two ends of the first dam are respectively located at the two side edges of the body portion. The first dam section, the second dam section, and the third dam section of the first dam are sequentially connected, the second dam section extends in the length direction, and the first dam section and the third dam section extend in the width direction, so that the first dam forms a semi-enclosed structure. The first drainage outlets are connected to the second dam section. When water flows into the second part, a part of water flows into the first drainage outlets directly or reversely under interception of the second dam section; and another part of water flows to the side edges of the body portion, and flows to the first drainage outlets reversely under interception of the first dam section and the third dam section. Therefore, the first dam has good water blocking effect overall, and can promote drainage. In comparison with a solution in which water is made to flow from the side edge of the body portion in a related technology, a drainage distance is shortened, and drainage efficiency is improved.

In addition, because the at least two first drainage outlets are respectively provided close to the first dam section and the third dam section, smooth drainage of water can be ensured regardless of a posture of a vehicle body.

In a possible implementation, the ventilation cover further includes two second dams, and the two second dams are both located in the second part and are respectively erected at the two side edges of the body portion.

A dam surface of each second dam is connected to an adjacent end portion of the first dam, a tail end of the second dam extends to the rear edge of the body portion in a direction away from the first dam, and the tail end is an end that is of the second dam and that is close to the front windshield of the vehicle. A height of the second dam is less than a height of the end portion that is of the first dam and that is connected to the second dam.

In the solution shown in this application, the two second dams are respectively disposed at the two side edges of the body portion, and the end portion of the first dam is connected to the dam surface of the second dam, to further enhance effect of enclosing the second part. This can suppress, to some extent, a case that water falling to the second part overflows the side edge of the body portion, so that the water is maximumly drained from the first drainage outlet.

In addition, because the height of the second dam is less than the height of the end portion that is of the first dam and that is connected to the second dam, when there is a large amount of water on the body portion and a drainage capability of the first drainage outlet is insufficient, water in the second part may further cross the second dam for drainage, to relieve drainage pressure. This ensures that the water in the second part does not cross the higher first dam, to avoid a risk that the water enters the air inlet.

In a possible implementation, the ventilation cover further includes two outward-extending water guide portions, and the two outward-extending water guide portions are respectively connected to tail ends of the two second dams and are configured to guide water crossing the second dam to a region between a fender and a shock tower of the vehicle for drainage.

In a possible implementation, at least two second drainage outlets are further provided on the body portion, the at least two second drainage outlets are located in the first part and are respectively located on two opposite sides of the enclosure portion in the length direction, and the second drainage outlet is spaced from the enclosure portion.

In the solution shown in this application, the at least two second drainage outlets are provided in the first part. In this way, even if water in the second part crosses the first dam and flows into the first part, the water can be drained in time from the second drainage outlet, to prevent water from accumulating in the first part and flowing into the air inlet. In addition, because the at least two second drainage outlets are distributed on the two opposite sides of the enclosure portion in the length direction, smooth drainage of water can be ensured regardless of a posture of the vehicle body. In other words, drainage effect of the first part is ensured.

In a possible implementation, a height of the body portion gradually decreases from the middle to two sides, and the at least two second drainage outlets are respectively located at lowest locations at two ends of the body portion in the first part.

In the solution shown in this application, the body portion is designed as a structure whose height gradually decreases from the middle to the two sides, and the second drainage outlets are provided at the lowest locations of the body portion in the first part. In this way, water flowing into the first part naturally flows to the second drainage outlets on the two sides under effect of gravity and is drained, to avoid water accumulation in the first part and ensure drainage effect.

In a possible implementation, the ventilation cover further includes a stop portion, the stop portion is connected to a front edge that is of the body portion and that is away from the front windshield of the vehicle, and is used for mounting of a sealing strip, and there is a first spacing between the stop portion and the enclosure portion.

In the solution shown in this application, the stop portion is connected to the front edge of the body portion, there is the first spacing between the stop portion and the enclosure portion, and the first spacing is used for flow guide and drainage. This can prevent water flowing into the first part from accumulating at the stop portion, to avoid a case that accumulated water crosses the front end of the enclosure portion and flows into the air inlet.

In a possible implementation, there is a second spacing between the first dam and the enclosure portion.

In the solution shown in this application, there is the second spacing between the first dam and the enclosure portion, to prevent water crossing the first dam from directly falling to the top of the enclosure portion and entering the air inlet.

In a possible implementation, the ventilation cover further includes a brim portion, and the brim portion is located above the air inlet and is connected to the first dam.

In the solution shown in this application, the brim portion is disposed above the air inlet. The brim portion can prevent liquid water crossing the first dam from directly flowing into the air inlet, and can prevent water mist crossing the first dam from being sucked into the air inlet under negative pressure of the air conditioning system. Therefore, effect of preventing water from entering the air inlet is further improved.

According to a second aspect, this application provides a drainage and air intake system of a front compartment. The system includes an air guide member, a drainage member, and the ventilation cover according to the first aspect.

The air guide member and the drainage member are both located below the ventilation cover, the air guide member is connected to the opening on the ventilation cover, and the drainage member is connected to the first drainage outlet on the ventilation cover.

In the solution shown in this application, the drainage and air intake system of the front compartment performs an air intake function by using the opening on the ventilation cover and the air guide member, and performs a drainage function by using the first drainage outlet on the ventilation cover and the drainage member.

In a possible implementation, an end that is of the drainage member and that is away from the first drainage outlet extends in a direction close to a bottom guard of the vehicle, and is configured to guide, to the bottom guard, water flowing into the first drainage outlet connected to the drainage member.

In the solution shown in this application, the water drained from the first drainage outlet flows to the bottom guard of the vehicle under guidance of the drainage member, and is drained out of the vehicle through a hole on the bottom guard.

In a possible implementation, the air guide member is an air guide pipe, the air guide pipe includes a first pipe section and a second pipe section, one end of the first pipe section is connected to the opening, and the other end is connected to the second pipe section.

The second pipe section is bent relative to the first pipe section, and an included angle between the first pipe section and the second pipe section is less than 90 degrees.

In the solution shown in this application, the air guide member includes the first pipe section connected to the opening on the body portion, and the second pipe section connected to the first pipe section in a bent manner. The included angle between the first pipe section and the second pipe section is an acute angle, which is less than 90 degrees, so that drops of water attached to inner walls of the first pipe section and the second pipe section naturally drop under effect of gravity, and do not enter the air conditioning system along the inner wall of the second pipe section.

In a possible implementation, a third drainage outlet is provided on the air guide member, and the third drainage outlet is located at a connection between the first pipe section and the second pipe section.

In the solution shown in this application, the third drainage outlet is provided at the connection between the first pipe section and the second pipe section of the air guide member. In this way, even if a small amount of water enters the air guide member, the water can be drained from the third drainage outlet in time, to prevent water accumulation in the air guide pipe.

According to a third aspect, this application provides a vehicle. The vehicle includes the ventilation cover according to the first aspect, or includes the drainage and air intake system of the front compartment according to the second aspect.

In the solution shown in this application, the enclosure portion is disposed around the opening on the body portion of the ventilation cover, and the top end of the enclosure portion encloses the air inlet. Because the plane on which the at least a part of the air inlet is located is inclined relative to the plane on which the opening is located, an opening area corresponding to the air inlet is greater than an opening area of the opening on the body portion. A larger opening area means a larger air intake area. Therefore, in comparison with a solution in which the opening on the body portion is directly used as an air inlet in a related technology, the solution shown in this application can increase an air intake amount of the air inlet and improve air intake performance of the air conditioning system of the vehicle.

In addition, because the enclosure portion is disposed around the opening on the body portion, the air inlet enclosed by the top end of the enclosure portion is higher than a surface of the body portion. In other words, it is not easy for water flowing on the body portion to cross the enclosure portion and enter the air inlet, so that water can be prevented from entering the air inlet, to protect the air conditioning system, and water can be prevented from entering an occupant compartment of the vehicle, to improve environmental comfort and driving and riding experience.

### BRIEF DESCRIPTION OF DRAWINGS

FIG. 1 is a diagram of a structure of a ventilation cover according to an embodiment of this application;
FIG. 2 is a diagram of a use environment of a ventilation cover according to an embodiment of this application;
FIG. 3 is a diagram of a structure of a ventilation cover including a grid portion according to an embodiment of this application;
FIG. 4 is an enlarged view of a structure at A in FIG. 3;
FIG. 5 is a diagram of a structure of another ventilation cover according to an embodiment of this application;
FIG. 6 is a diagram of a partial structure of a ventilation cover according to an embodiment of this application;
FIG. 7 is a diagram of an arrangement structure of a second dam according to an embodiment of this application;
FIG. 8 is a diagram of another use environment of a ventilation cover according to an embodiment of this application;
FIG. 9 is a diagram of an arrangement location of a second drainage outlet according to an embodiment of this application;
FIG. 10 is a diagram of a cross-sectional structure of a ventilation cover according to an embodiment of this application;
FIG. 11 is a diagram of an arrangement location of an enclosure portion according to an embodiment of this application;
FIG. 12 is a diagram of an arrangement structure of a brim portion according to an embodiment of this application;
FIG. 13 is a diagram of a structure of a drainage and air intake system of a front compartment according to an embodiment of this application;
FIG. 14 is a diagram of a structure of an air guide member according to an embodiment of this application;
FIG. 15 is a diagram of an arrangement structure of an air guide member according to an embodiment of this application; and
FIG. 16 is a diagram of an arrangement location of a third drainage outlet according to an embodiment of this application.

Reference numerals:
1: ventilation cover; 11: body portion; 111: opening; 112: first drainage outlet; 113: first part; 114: second part; 115: second drainage outlet; 116: rear edge; 117: front edge; 118: side edge; 1191: bottom plate; 1192: side plate; 12: enclosure portion; 121: bottom end; 122: top end; 123: air inlet; 124: front end; 125: rear end; 126: second spacing; 13: grid portion; 14: first dam; 141: first dam section; 142: second dam section; 143: third dam section; 144: end portion; 15: second dam; 151: tail end; 16: stop portion; 161: first spacing; 17: outward-extending water guide portion; 18: brim portion;
2: air guide member; 21: first pipe section; 22: second pipe section; 23: third drainage outlet;
3: drainage member;
4: front windshield.

### DESCRIPTION OF EMBODIMENTS

To make objectives, technical solutions, and advantages of the present disclosure clearer, the following further describes implementations of the present disclosure in detail with reference to accompanying drawings.

Embodiments relate to a ventilation cover. An air inlet on the ventilation cover has a larger air intake area, to help increase an air intake amount, that is, improve air intake performance of an air conditioning system. In addition, the ventilation cover can effectively prevent water from entering the air inlet, to prevent water from entering the air conditioning system and an occupant compartment, enhance a function of protecting the air conditioning system, and improve environmental comfort of the occupant compartment.

The ventilation cover may be used in a drainage and air intake system of a front compartment of a vehicle. In this way, the ventilation cover can cooperate with an air guide pipe to provide more external air for an air conditioning system of the vehicle, to implement an air intake function. In addition, the ventilation cover can cooperate with a drainage member to quickly drain water flowing from a vehicle roof and a front windshield of the vehicle out of the vehicle, to implement a drainage function.

The following further describes implementations of this application in detail with reference to the accompanying drawings.

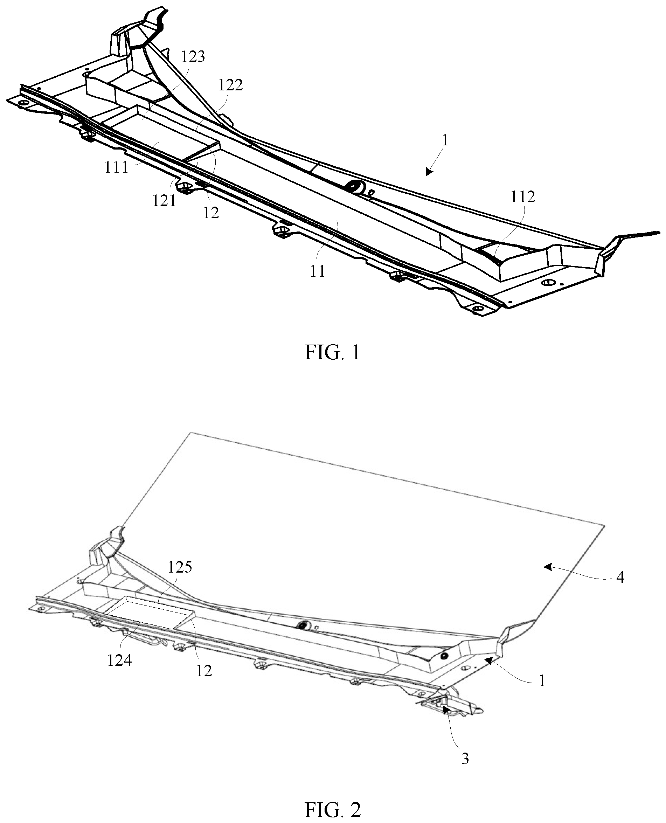

FIG. 1 is a diagram of a structure of a ventilation cover 1 according to an embodiment of this application. Refer to FIG. 1. The ventilation cover 1 provided in this embodiment of this application includes a body portion 11 and an enclosure portion 12. The body portion 11 is configured to form a main structure of the ventilation cover 1, and corresponds to an air intake function and a drainage function of the ventilation cover 1. An opening 111 and a first drainage outlet 112 are separately provided on the body portion 11, and the opening 111 and the first drainage outlet 112 are spaced from each other. The enclosure portion 12 is connected to the body portion 11. A bottom end 121 of the enclosure portion 12 surrounds the opening 111 and is vertically connected to the body portion 11, a top end 122 of the enclosure portion 12 encloses an air inlet 123, and the air inlet 123 communicates with the opening 111 and is located above the opening 111. In other words, the air inlet 123 is higher than the opening 111 and higher than a surface that is of the body portion 11 and that is for providing the opening 111. External air may flow into the opening 111 through the air inlet 123 under effect of negative pressure, and then flow into an air conditioning system of a vehicle. The top end 122 of the enclosure portion 12 is opposite to the bottom end 121.

In this embodiment, a plane on which at least a part of the air inlet 123 is located is inclined relative to a plane on which the opening 111 is located. In other words, height differences between different locations of the air inlet 123 and corresponding locations of the opening 111 are not completely equal. There may be locations with a larger height difference, and in this case, a distance between the air inlet 123 and the opening 111 is larger at the locations. There may also be locations with a smaller height difference, and in this case, a distance between the air inlet 123 and the opening 111 is smaller at the locations.

When the ventilation cover 1 receives water flowing from a roof and a front windshield 4 of the vehicle, water flows along a vehicle body in a direction from rear to front, where the direction from rear to front is a direction from the rear of the vehicle to the front of the vehicle. Therefore, considering that an amount of water faced by a rear end 125 of the enclosure portion 12 is generally greater than an amount of water faced by a front end 124 of the enclosure portion 12, in an example, as shown in FIG. 2, a height of the front end 124 of the enclosure portion 12 is less than a height of the rear end 125 of the enclosure portion 12. In other words, the front end 124 of the enclosure portion 12 is closer to the opening 111 than the rear end 125. The front end 124 of the enclosure portion 12 is opposite to the rear end 125, and the front end 124 is farther away from the front windshield 4 of the vehicle than the rear end 125.

Therefore, the rear end 125 of the enclosure portion 12 has better water blocking effect due to the larger height, and can effectively prevent water flowing to the body portion 11 from crossing the rear end 125 and entering the air inlet 123. In addition, due to the structure design of the lower front and the higher rear, the top end 122 of the enclosure portion 12 can enclose the air inlet 123 that is at least partially inclined to a higher location from the front end 124 to the rear end 125.

For example, as shown in FIG. 2, a height of the enclosure portion 12 gradually increases in a direction from the front end 124 of the enclosure portion 12 to the rear end 125 of the enclosure portion 12. In this case, the air inlet 123 is slope-shaped and is located on one plane overall, and the plane is inclined relative to the plane on which the opening 111 is located.

For another example, in the direction from the front end 124 of the enclosure portion 12 to the rear end 125 of the enclosure portion 12, a height of a front half of the enclosure portion 12 gradually increases, and a height of a rear half remains unchanged. In this case, a front half of the air inlet 123 is slope-shaped and is located on one plane, the plane is parallel to the plane on which the opening 111 is located, a rear half is located on another plane, and the plane is parallel to the plane on which the opening 111 is located.

A height of each location of the enclosure portion 12 may be configured by a designer according to an actual requirement. However, it should be ensured that the height is not excessively small, where an excessively small height may cause water on the body portion 11 to easily cross the enclosure portion 12 and enter the air inlet 123; and the height cannot be excessively large, where an excessively large height may cause the top end 122 of the enclosure portion 12 to abut against a front hood (also referred to as an engine hood), hindering air intake.

For example, a height of the front end 124 of the enclosure portion 12 may range from 20 mm to 30 mm, and a height of the rear end 125 of the enclosure portion 12 may range from 30 mm to 40 mm.

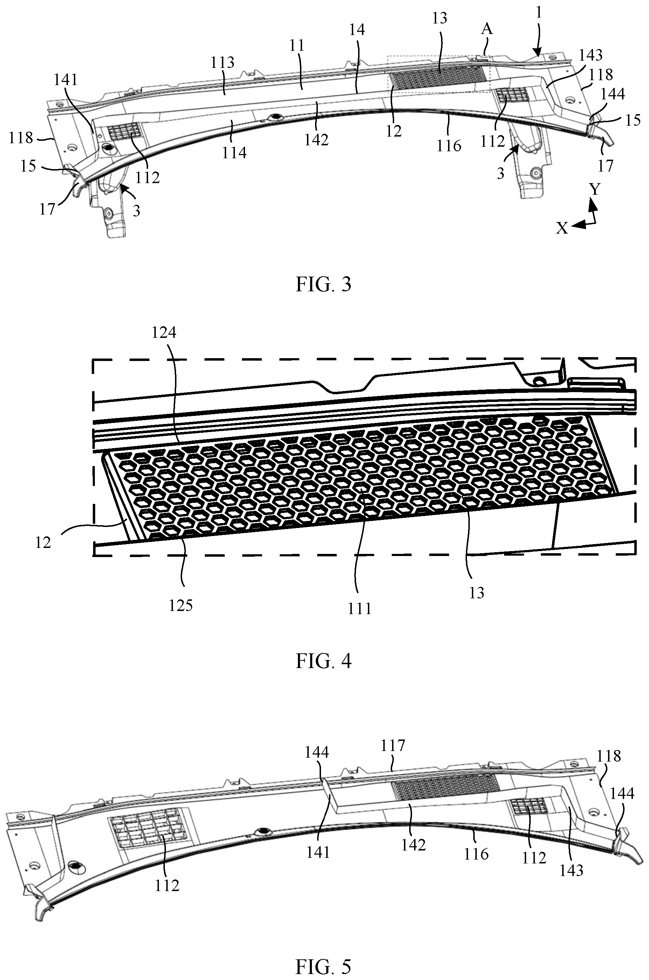

In an example, as shown in FIG. 3 and FIG. 4, the ventilation cover 1 may further include a grid portion 13. The grid portion 13 may cover the air inlet 123, is connected to the top end 122 of the enclosure portion 12, and is configured to prevent impurities from entering the air inlet 123.

The grid portion 13 and the enclosure portion 12 may be separately formed and then connected together in a manner of bonding, welding, clamping, or the like.

Alternatively, the grid portion 13 and the enclosure portion 12 may be an integrally formed air intake grille having a frame. The frame of the air intake grille surrounds the opening 111 of the body portion 11, and is in sealing connection to the body portion 11 in a manner of bonding, welding, or the like, to form the enclosure portion 12.

Alternatively, the grid portion 13, the enclosure portion 12, and the body portion 11 may be an integrally formed structure manufactured by using an integral formation process. In comparison with the foregoing two solutions, a manufacturing process of the solution of the integrally formed structure is simpler, and the manufactured ventilation cover 1 has higher structure strength.

Still refer to FIG. 3. The ventilation cover 1 provided in this embodiment of this application may further include a first dam 14. The first dam 14 is connected to the body portion 11 and divides the body portion 11 into a first part 113 and a second part 114. Space in which the first part 113 is located forms a dry region into which water does not easily flow, and the opening 111 and the enclosure portion 12 are both located in the first part 113. Space in which the second part 114 is located forms a wet region that is mainly used to receive water and drain water, and the first drainage outlet 112 is located in the second part 114. It should be noted that the first part 113 and the second part 114 are isolated from each other and do not communicate with each other.

In this embodiment, to enable the first dam 14 to have better water blocking effect, and more effectively prevent water flowing to the second part 114 from crossing the first dam 14 and flowing into the first part 113, a height of the first dam 14 is set to be greater than a height of the enclosure portion 12. However, the first dam 14 cannot be excessively high, to avoid affecting gas flow and affecting air intake at the air inlet 123.

Optionally, the height of the first dam 14 may range from 40 mm to 50 mm. A specific height of the first dam 14 is configured by a designer according to an actual requirement, for example, 42 mm, 44 mm, or 46 mm. This is not specifically limited in embodiments of this application, provided that the height of the first dam 14 is greater than the height of the enclosure portion 12 and there is a gap between the first dam 14 and the front hood.

It is easy to understand that the first dam 14 includes two opposite end portions 144 in an extension direction. In an example, as shown in FIG. 3 and FIG. 5, at least one of the two end portions 144 of the first dam 14 is located at a side edge 118 of the body portion 11, and is spaced from a rear edge 116 of the body portion 11, so that the first part 113 and the second part 114 that are enclosed have different spatial locations and arrangement manners. In this embodiment, the side edge 118 of the body portion 11 is an edge on either side, and the rear edge 116 of the body portion 11 is an edge close to the front windshield 4 of the vehicle.

FIG. 3 shows the first dam 14 in which the two end portions 144 are respectively located at two side edges 118 of the body portion 11. In this case, with reference to FIG. 2 and FIG. 3, the first dam 14 runs through the body portion 11 in a length direction of the body portion 11, so that the first part 113 and the second part 114 are sequentially arranged from front to rear. During use in the vehicle, the first part 113 is completely located below the front hood of the vehicle, to prevent rainwater from directly falling into the air inlet 123 in rainy weather, the second part 114 is connected to the front windshield 4 of the vehicle, and the front hood covers at most a region that is of the second part 114 and that is close to the first part 113, so that the second part 114 is used to receive rainwater and drain water.

Still refer to FIG. 3. The first dam 14 includes a first dam section 141, a second dam section 142, and a third dam section 143 that are sequentially connected in the length direction, the second dam section 142 extends in the length direction, the first dam section 141 and the third dam section 143 are located on a same side of the second dam section 142, and at least a part of the first dam section 141 and at least a part of the third dam section 143 extend in a width direction of the body portion 11. In this way, the formed first dam 14 is of a semi-enclosed structure, and can collect water flowing to the second region, so that the water flows out from the first drainage outlet 112. In FIG. 3, the length direction of the body portion 11 is marked as an X direction, and the width direction is marked as a Y direction.

Optionally, a length of the second dam section 142 is greater than a length of the first dam section 141, and is greater than a length of the third dam section 143.

Optionally, the length of the second dam section 142 is greater than a sum of the length of the first dam section 141 and the length of the third dam section 143.

There are at least two first drainage outlets 112, the at least two first drainage outlets 112 are connected to the second dam section 142 and are respectively located at locations close to the first dam section 141 and the third dam section 143, and each first drainage outlet 112 is spaced from the adjacent first dam section 141 or the adjacent third dam section 143. The at least two first drainage outlets 112 being respectively located at locations close to the first dam section 141 and the third dam section 143 and being spaced from the adjacent first dam section 141 or the adjacent third dam section 143 means that, for any first drainage outlet 112, there is a smaller spacing between the first drainage outlet 112 and the adjacent first dam section 141 or the adjacent third dam section 143, and there is a larger spacing between the first drainage outlet 112 and the far third dam section 143 or the far first dam section 141.

Optionally, a distance between two first drainage outlets 112 is greater than a distance between the first dam section 141 and an adjacent first drainage outlet 112, and is greater than a distance between the third dam section 143 and an adjacent first drainage outlet 112.

For example, as shown in FIG. 3, there are two first drainage outlets 112, and the two first drainage outlets 112 are both connected to the second dam section 142. One first drainage outlet 112 is provided close to the first dam section 141, and there is a smaller spacing between the first drainage outlet 112 and the first dam section 141 and a larger spacing between the first drainage outlet 112 and the third dam section 143. The other first drainage outlet 112 is provided close to the third dam section 143, and there is a smaller spacing between the first drainage outlet 112 and the third dam section 143 and a larger spacing between the first drainage outlet 112 and the first dam section 141. In this way, when water flows in the second part 114 from rear to front, the water is intercepted by the first dam 14, and flows, under guidance of the first dam section 141 and the third dam section 143, to a region in which the second dam section 142 is located, to directly fall downward into the first drainage outlet 112 for drainage. In comparison with a solution in which water is drained from the side edge 118 of the body portion 11, in this embodiment of this application, the first drainage outlet 112 is spaced from the side edge 118, and therefore a drainage distance is shorter and drainage efficiency is higher. In addition, because the two drainage outlets are respectively located on two sides of the second dam section 142, regardless of a posture of the vehicle body, water can be smoothly drained from the corresponding first drainage outlet 112, to prevent water accumulation in the second part 114.

In an example, a height of the body portion 11 gradually decreases from the middle to two sides in the length direction. In other words, in comparison with a horizontal plane, a middle location of the body portion 11 is higher, and edge locations on the two sides are lower. Therefore, when water on the vehicle roof and the front windshield 4 of the vehicle flows to a middle location of the ventilation cover 1, the water naturally flows from the middle location to two sides under effect of gravity, until the water flows into the at least two first drainage outlets 112 on the two sides, so that drainage effect is ensured.

FIG. 5 shows the first dam 14 in which one end portion 144 is located at a side edge 118 of the body portion 11 and the other end portion 144 is located at a front edge 117 of the body portion 11. The front edge 117 of the body portion 11 is opposite to the rear edge 116. In this case, with reference to FIG. 5, the first dam 14 includes a first dam section 141, a second dam section 142, and a third dam section 143 that are sequentially connected in the length direction, the second dam section 142 extends in the length direction, the first dam section 141 and the third dam section 143 are located on two opposite sides of the second dam section 142, and at least a part of the first dam section 141 and at least a part of the third dam section 143 extend in the width direction of the body portion 11. In this way, the formed first dam 14 is of an inverted-Z-shaped structure or an L-shaped structure, and can enclose the enclosure portion 12 and the air inlet 123, so that the enclosure portion 12 and the air inlet 123 are isolated from the wet region.

In comparison with the ventilation cover 1 shown in FIG. 3, in the ventilation cover 1 shown in FIG. 5, space of the wet region is obviously larger than space of the dry region. In this case, an opening area of the first drainage outlet 112 may be designed to be larger, to improve a drainage capability of the first drainage outlet 112, so as to improve drainage efficiency of the wet region. For example, with reference to FIG. 5, in two first drainage outlets 112, an opening area of a first drainage outlet 112 away from the enclosure portion 12 is greater than an opening area of a first drainage outlet 112 close to the enclosure portion 12. Therefore, the first drainage outlet 112 away from the enclosure portion 12 obviously has a stronger drainage capability.

It should be noted that, because two ends of the first dam 14 are located at the side edges 118 of the body portion 11 and are spaced from the rear edge 116 of the body portion 11, when the ventilation cover 1 is used in the vehicle, the first dam 14, the body portion 11, and the front windshield 4 of the vehicle cooperate to enclose a drainage opening. When an amount of water flowing to the second part 114 is excessive and a drainage speed of the first drainage outlet 112 is lower than a water accumulation speed, accumulated water may also be drained from the drainage opening, to relieve drainage pressure of the first drainage outlet 112, and prevent the accumulated water from being excessively high and crossing the first dam 14.

In a possible case, some electronics and steel-aluminum lap structures are arranged at a drainage location corresponding to the drainage opening. Although corresponding waterproof measures are taken at these structures, a capability of these structures to resist water and oxygen corrosion is limited. Frequent drainage at this location may cause failures of the electronics or corrosion of the steel-aluminum lap structures.

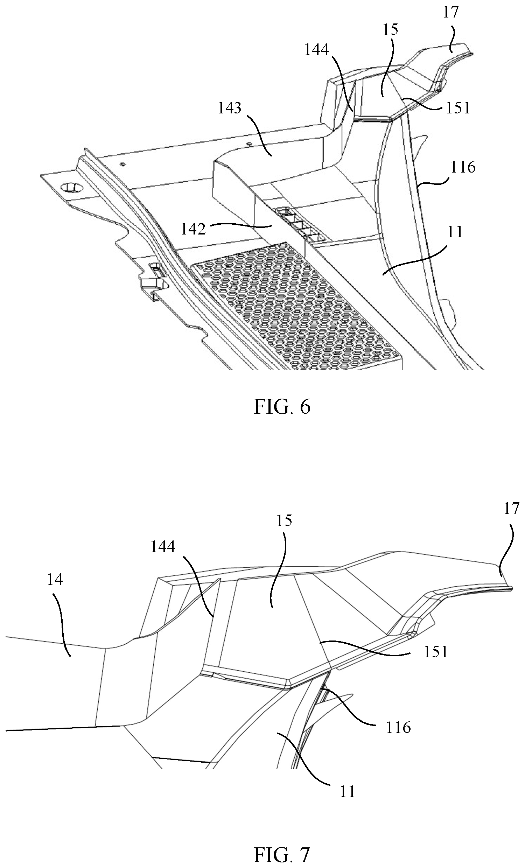

In an example, as shown in FIG. 3 and FIG. 6, the ventilation cover 1 further includes two second dams 15, the two second dams 15 are both located in the second part 114 and are respectively erected at the two side edges 118 of the body portion 11, a dam surface of each second dam 15 is connected to an adjacent end portion 144 of the first dam 14, and a tail end 151 of the second dam 15 extends to the rear edge 116 of the body portion 11 in a direction away from the first dam 14. In other words, in this example, the second dam 15 is disposed at a location of the drainage opening, and the second dam 15 can prevent, to some extent, water from being drained from this location, so that the water is maximumly drained from the first drainage outlet 112. The tail end 151 of the second dam 15 is an end close to the front windshield 4 of the vehicle.

As shown in FIG. 7, a height of the second dam 15 is less than a height of the end portion 144 that is of the first dam 14 and that is connected to the second dam 15. Such setting is to avoid a case that excessive water accumulates because only the first drainage outlet 112 is used for drainage when an amount of water in the second part 114 is excessive, and avoid a risk that water enters the dry region. For example, in a case of light or medium rainfall, a smaller amount of water flows into the second part 114, and in this case, the second dam 15 and the first dam 14 cooperate to intercept the water in the second region, and the water is drained from the first drainage outlet 112. In a case of heavy rainfall, a larger amount of water flows into the second part 114, the drainage capability of the first drainage outlet 112 is insufficient, and in this case, the water may cross the second dam 15 for drainage. This relieves drainage pressure, and prevents accumulated water from crossing the higher first dam 14.

In this embodiment, as described above, the height of the second dam 15 may be determined based on rainfall, for example, configured to satisfy the following: water cannot cross the second dam 15 during light or medium rainfall, and water can cross the second dam 15 and cannot cross the first dam 14 during heavy rainfall. The light or medium rainfall and the heavy rainfall may respectively correspond to corresponding rainfall levels in an enhanced rain test of the vehicle, or the light or medium rainfall and the heavy rainfall may be determined based on the drainage capability of the first drainage outlet 112.

Optionally, the height of the second dam 15 may range from 10 mm to 30 mm, for example, may be 14 mm, 17 mm, 20 mm, 22 mm, or 25 mm.

In an example, as shown in FIG. 7, the ventilation cover 1 further includes two outward-extending water guide portions 17, and the two outward-extending water guide portions 17 are respectively connected to tail ends 151 of the two second dams 15 and extend in a direction away from the body portion 11, to guide water crossing the second dam to a region between a fender and a shock tower of the vehicle for drainage.

In some embodiments, at least one of the first dam 14, the second dam 15, and the outward-extending water guide portion 17 is a soft structure made of a soft material, for example, made of soft rubber through injection molding, and is flexible to some extent. In this way, when the soft structure collides with an external object, for example, collides with a pedestrian, because the soft structure is flexible, the soft structure can play a buffer function to absorb some energy during the collision, to reduce injuries to the pedestrian and provide a pedestrian protection function.

The following describes structure features related to the second part 114.

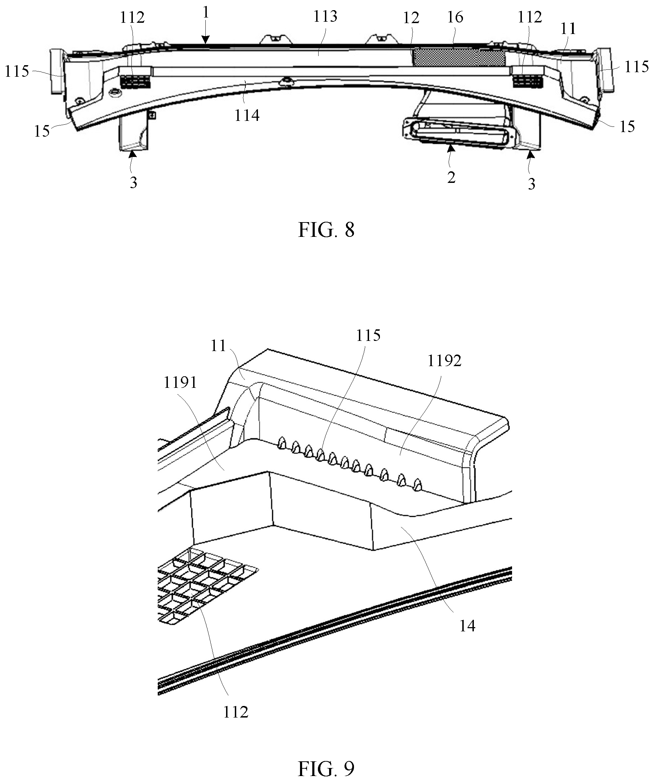

In an example, as shown in FIG. 8, at least two second drainage outlets 115 are provided on the body portion 11, and the at least two second drainage outlets 115 are located in the first part 113 and are configured to drain water from the first part 113 in time when the water crosses the first dam 14 and enters the first part 113. The at least two second drainage outlets 115 are respectively located on two opposite sides of the enclosure portion 12 in the length direction. For example, there are two second drainage outlets 115 in FIG. 8, one second drainage outlet 115 is located between the enclosure portion 12 and a left side edge 118 of the body portion 11 and is spaced from the enclosure portion 12, and the other second drainage outlet 115 is located between the enclosure portion 12 and a right side edge 118 of the body portion 11 and is spaced from the enclosure portion 12.

The at least two second drainage outlets 115 are respectively provided on the two opposite sides of the enclosure portion 12 in the length direction, so that water can be smoothly drained from the corresponding second drainage outlet 115 regardless of a posture of the vehicle body. For example, when the vehicle body tilts leftward, under effect of gravity, accumulated water on the body portion 11 flows leftward, and is drained from a left second drainage outlet 115; or when the vehicle body tilts rightward, under effect of gravity, accumulated water on the body portion 11 flows rightward, and is drained from a right second drainage outlet 115.

A shape and a style of the second drainage outlet 115 are not specifically limited in this application, provided that drainage can be ensured. FIG. 9 shows a possible structure style of the second drainage outlet 115. Refer to FIG. 9. Each second drainage outlet 115 includes a plurality of drainage holes sequentially arranged in a width direction of the ventilation cover 1, and the drainage holes are located at a location at which a bottom plate 1191 and a side plate 1192 of the body portion 11 intersect. When the vehicle body tilts to one side, accumulated water on the body portion 11 flows to the side and accumulates on the side plate 1192 located on the side, and then is drained from the corresponding second drainage outlet 115, so that drainage effect is ensured.

Optionally, as shown in FIG. 9, a spacing between two adjacent drainage holes gradually increases in a direction from front to rear. Water flowing into the first part 113 flows forward and is more likely to accumulate at a more front location in the first part 113. Therefore, the plurality of drainage holes are arranged in a manner in which drainage holes are denser when the drainage holes are closer to the front. In other words, arrangement of the plurality of drainage holes corresponds to distribution of the water amount, so that better drainage effect can be achieved.

A width of the drainage hole may be configured by a skilled person according to an arrangement requirement. This is not specifically limited in embodiments of this application, provided that a sufficient drainage capability can be ensured and a level of accumulated water in the first part 113 is not higher than the enclosure portion 12. For example, a hole diameter of each drainage hole may range from 3 mm to 6 mm, for example, is 4 mm or 5 mm.

In addition, as mentioned above, the height of the body portion 11 gradually decreases from the middle to the two sides in the length direction. Therefore, when water entering the first part 113 flows to a middle location, the water naturally flows from the middle location to two sides under effect of gravity, until the water flows into the at least two second drainage outlets 115 located on the two sides.

In addition, to further ensure drainage effect, in an example, the at least two second drainage outlets 115 are respectively located at lowest locations at two ends of the body portion 11 in the first part 113, that is, located at the side edges 118 of the body portion 11.

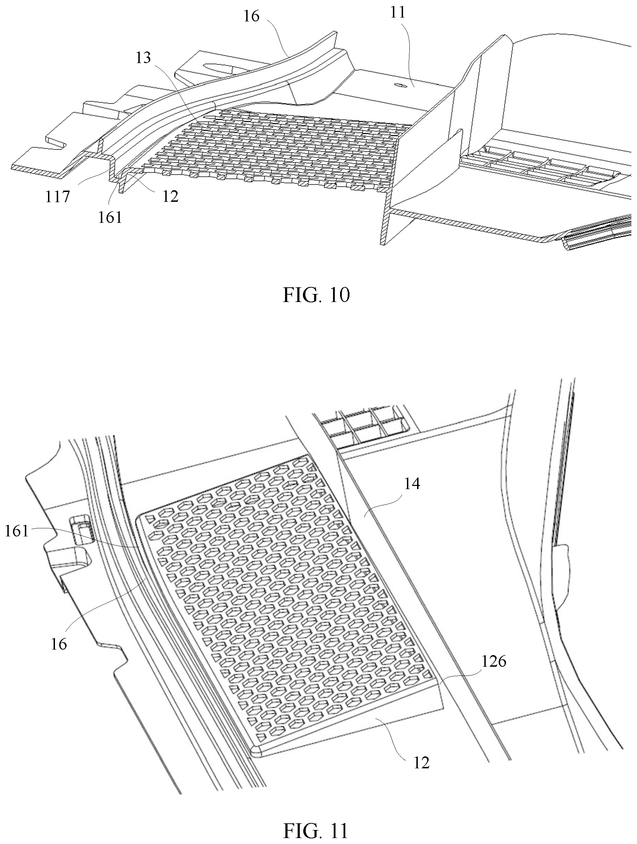

FIG. 10 and FIG. 11 each show an arrangement location of the enclosure portion 12 in the first part 113. As shown in FIG. 10, there is a first spacing 161 between the enclosure portion 12 and a stop portion 16 of the ventilation cover 1, and the stop portion 16 is connected to the front edge 117 of the body portion 11, and is used for mounting of a sealing strip. The existence of the first spacing 161 means that the enclosure portion 12 and the stop portion 16 are not directly connected. In this way, when water flows to the stop portion 16, the water can flow along the first spacing 161 to the second drainage outlets 115 on the two sides and is drained, and does not accumulate at the stop portion 16. This avoids a case that accumulated water crosses the front end 124 of the enclosure portion 12 due to an excessively high level of accumulated water at the stop portion 16. As shown in FIG. 11, there is a second spacing 126 between the enclosure portion 12 and the first dam 14, and the second spacing 126 is configured to prevent water crossing the first dam 14 from directly falling to the top of the enclosure portion 12 and entering the air inlet 123.

Widths of the first spacing 161 and the second spacing 126 may be configured by a skilled person according to an arrangement requirement. This is not specifically limited in embodiments of this application, provided that the first spacing 161 can form sufficient drainage space to prevent accumulated water at the stop portion 16 from crossing the front end 124 of the enclosure portion 12, and the second spacing 126 can make the enclosure portion 12 far enough away from the first dam 14 so that water crossing the first dam 14 does not directly fall to the top end 122 of the enclosure portion 12. For example, the width of the first spacing 161 may range from 1 mm to 5 mm, for example, may be 2 mm, 3 mm, or 4 mm; and the width of the second spacing 126 may range from 1 mm to 5 mm, for example, may be 2 mm, 3 mm, or 4 mm.

It is easy to understand that, because water on the vehicle roof and the front windshield 4 of the vehicle hits the first dam 14 fast, a lot of water mist may be formed near the first dam 14 and float in the air. When the air conditioning system runs, negative pressure is generated, and air around the air inlet 123 is sucked into the air inlet 123. In this case, a large amount of air carrying water mist may be sucked, causing damage to the air conditioning system, and causing a large amount of water vapor to enter an occupant compartment and result in discomfort of a driver and a passenger.

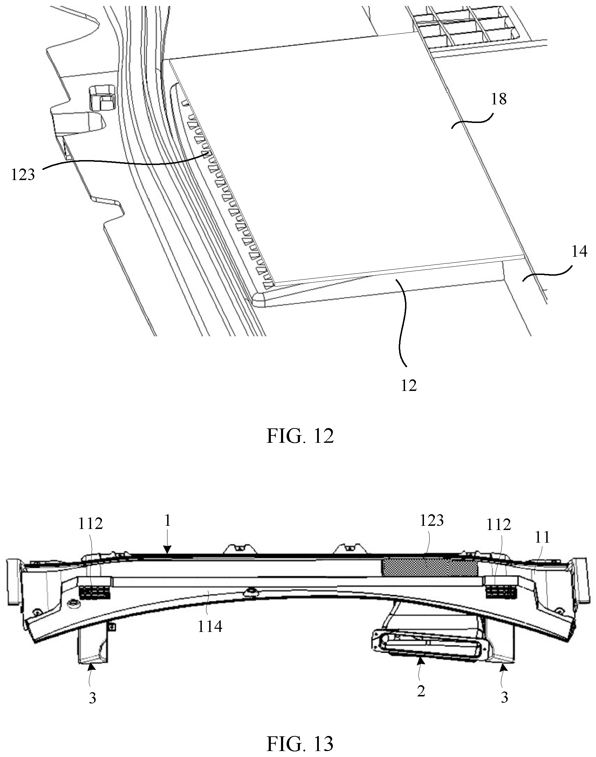

To further improve effect of preventing water from entering the air inlet 123, in an example, as shown in FIG. 12, the ventilation cover 1 further includes a brim portion 18, and the brim portion 18 is located above the air inlet 123 and is connected to the first dam 14. The brim portion 18 may form a barrier above the air inlet 123. In this way, even if water crosses the first dam 14, the water does not fall into the air inlet 123. In addition, the brim portion 18 isolates the air inlet 123 from air carrying water mist. This greatly reduces a water content of external air entering the air inlet 123, protects the air conditioning system from water and oxygen corrosion, and ensures environmental comfort in the occupant compartment. "Above the air inlet 123" means a side that is of the air inlet 123 and that is away from the opening 111.

For example, an orthographic projection of the air inlet 123 onto the plane on which the opening 111 is located is within an orthographic projection of the brim portion 18 onto the plane on which the opening 111 is located. In other words, the air inlet 123 is completely covered by the brim portion 18, to ensure that the brim portion 18 effectively protects the air inlet 123.

It should be noted that a spacing needs to be retained between the brim portion 18 and the air inlet 123. In other words, the brim portion 18 is not in contact with the top end 122 of the enclosure portion 12, to avoid affecting air intake effect of the air inlet 123.

In embodiments of this application, the enclosure portion 12 protrudes from the body portion 11 of the ventilation cover 1, and the enclosure portion 12 surrounds the opening 111, and encloses, above the opening 111, the air inlet 123 with at least a part inclined relative to the opening 111. Because the air inlet 123 has a larger air intake area than the opening 111, in comparison with a solution in which the opening 111 is directly used for air intake, an air intake amount is increased, and air intake performance of an air conditioner is effectively improved. The ventilation cover 1 further includes the first dam 14 that divides the body portion 11 into the dry region and the wet region that do not communicate with each other. The air inlet is located in the dry region and is configured to implement an air intake function. Several drainage structures such as the first drainage outlet 112 and the second dam 15 are disposed in the wet region and are configured to implement a drainage function, to prevent, to greatest extent, water from flowing into the dry region.

In addition, to deal with an occasional situation of water entering the dry region, the second drainage outlet 115 is further provided in the dry region and is configured to drain, in time, the water entering the dry region, to avoid a risk of the water entering the air inlet 123 caused by water accumulation in the dry region. In addition, to resolve a problem that a large amount of water mist caused by a water flow hit may be sucked into the air conditioning system under negative pressure, the brim portion 18 is further disposed above the air inlet 123, to effectively isolate the air inlet 123 from air with a high water content, so as to reduce suck of the air with the high water content into the air inlet 123. Therefore, the ventilation cover 1 increases an air intake amount of the air inlet 123 while ensuring that water is prevented from entering the air inlet 123.

An embodiment of this application further provides a drainage and air intake system of a front compartment. FIG. 13 is a diagram of a structure of the drainage and air intake system of the front compartment. As shown in FIG. 13, the system includes an air guide member 2, a drainage member 3, and the foregoing ventilation cover 1. The air guide member 2 and the drainage member 3 are both located below the ventilation cover 1.

The air guide member 2 is configured to form an air flow channel, and may be connected to the opening 111 on the ventilation cover 1, to receive external air flowing from the opening 111 and guide the external air into an air conditioning system of a vehicle, so as to implement air supply. Under effect of negative pressure of the air conditioning system, the external air enters from the air inlet 123, and flows into the air conditioning system through the opening 111 and the air guide member 2 in sequence.

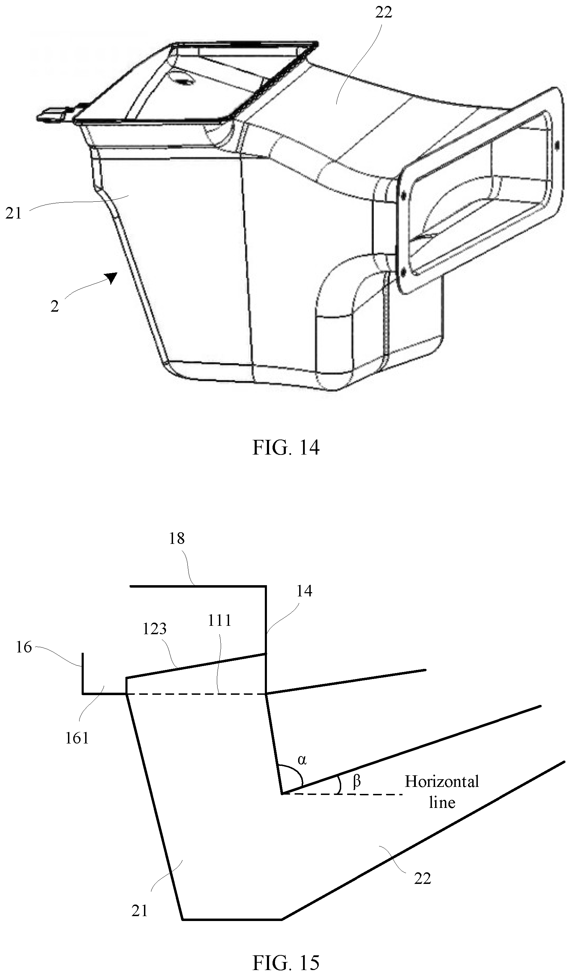

In an example, the air guide member 2 may be, for example, an air guide pipe. As shown in FIG. 14 and FIG. 15, the air guide pipe includes a first pipe section 21 and a second pipe section 22, one end of the first pipe section 21 is connected to the opening 111, and the other end is connected to the second pipe section 22. The first pipe section 21 is bent relative to the second pipe section 22, and an included angle α between the first pipe section 21 and the second pipe section 22 is less than 90°.

It should be noted that, when the drainage and air intake system of the front compartment is used in the vehicle, there should be an included angle β between the second pipe section 22 of the air guide pipe and a horizontal line, where 0°<β<180°. In this way, when water enters the air inlet 123 and flows into the air guide pipe along an inner wall, and water vapor in air condenses on a pipe wall of the air guide pipe to form drops of water, the drops of water naturally drop at the bottom of the air guide pipe under effect of gravity, and do not move along the pipe wall in a direction close to the air conditioning system.

Optionally, a longitudinal section of the second pipe section 22 is trumpet-shaped. In other words, a part that is of the second pipe section 22 and that is farther away from the first pipe section 21 has a larger cross-sectional area. This ensures a sufficient air absorption amount, and ensures that drops of water on a pipe wall of the second pipe section 22 can flow to the first pipe section 21 to be away from the air conditioning system.

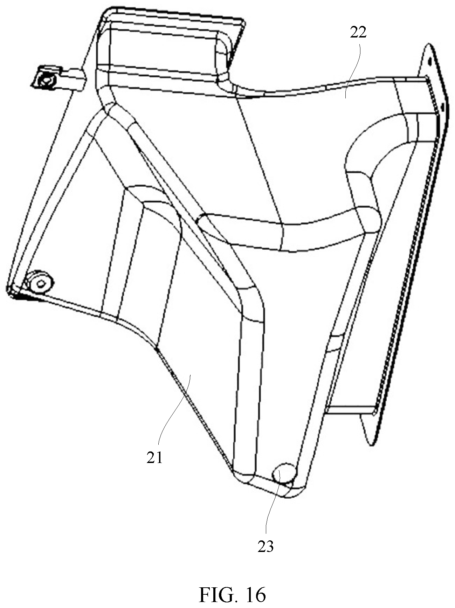

For water dripped at the bottom of the air guide pipe, as shown in FIG. 16, a third drainage outlet 23 is further provided at the bottom of the air guide pipe. The third drainage outlet 23 is located at the bottom of the air guide pipe, that is, at a lowest location on the air guide pipe. For example, when the air guide pipe is arranged in an orientation shown in FIG. 15, the third drainage outlet 23 may be located at a connection between the first pipe section 21 and the second pipe section 22, to ensure that all accumulated water in the air guide pipe can be drained.

The drainage member 3 is configured to form a drainage channel, and may be connected to the first drainage outlet 112 on the ventilation cover 1, to guide water flowing from the first drainage outlet 112 to a specified drainage location for drainage.

In an example, an end that is of the drainage member 3 and that is away from the first drainage outlet 112 extends in a direction close to a bottom guard of the vehicle, and is configured to guide water flowing into the first drainage outlet 112 to the bottom guard, to drain the water out of the vehicle through a hole on the bottom guard.

In an example, there are also two drainage members 3 to correspond to the two first drainage outlets 112 on the body portion 11 of the ventilation cover 1, and large space is formed between the two drainage members 3. Therefore, the solution in this example is very friendly to a vehicle model with a reinforcing beam in the middle of a front compartment of a vehicle, for example, a V-shaped beam barrier, and a short size in a length direction between a shock tower and a front region of the vehicle.

Specifically, in some vehicles, a V-shaped beam is disposed on a vehicle frame in a region of a front compartment, to improve stiffness and modality of the vehicle frame. However, the V-shaped beam occupies space of the front compartment, and in this case, a large cross-span water gutter cannot be arranged. In the drainage and air intake system of the front compartment provided in this embodiment of this application, only the two small-sized drainage members 3 are connected to locations that are on two sides of the ventilation cover 1 and that correspond to the first drainage outlets 112, and the space between the two drainage members 3 is vacant and can be used to meet a V-shaped beam arrangement requirement.

An embodiment of this application further provides a vehicle. The vehicle includes the ventilation cover 1, or the vehicle includes the drainage and air intake system of the front compartment.

In the descriptions of this application, unless otherwise specified, "/" means "or". For example, A/B may indicate A or B. In this specification, "and/or" merely describes an association relationship between associated objects, and indicates that three relationships may exist. For example, A and/or B may indicate the following three cases: Only A exists, both A and B exist, and only B exists. In addition, "at least one" means one or more, and "a plurality of" means two or more. Expressions such as "first" and "second" do not limit a quantity and an execution sequence, and expressions such as "first" and "second" do not indicate a definite difference.

In this application, an expression such as "example" or "for example" represents giving an example, an illustration, or a description. Any embodiment or design scheme described as an "example" or "for example" in this application shall not be explained as being more preferred or having more advantages than another embodiment or design scheme. To be precise, use of the expression such as "example" or "for example" is intended to present a relative concept in a specific manner.

All of the foregoing optional technical solutions may form optional embodiments of the present disclosure through any combination. Details are not described herein.

The foregoing descriptions are merely optional embodiments of this application, and are not intended to limit this application. Any modification, equivalent replacement, or improvement made without departing from the spirit and principle of this application should fall within the protection scope of this application.

## Claims

1. A ventilation cover, wherein the ventilation cover (1) comprises a body portion (11) and an enclosure portion (12);
an opening (111) and a first drainage outlet (112) are spaced on the body portion (11);
a bottom end (121) of the enclosure portion (12) is disposed around the opening (111) and is connected to the body portion (11), a top end (122) of the enclosure portion (12) encloses an air inlet (123), the air inlet (123) communicates with the opening (111) to provide external air for an air conditioning system of a vehicle through the opening (111), and the bottom end (121) is opposite to the top end (122); and
a plane on which at least a part of the air inlet (123) is located is inclined relative to a plane on which the opening (111) is located.

2. The ventilation cover according to claim 1, wherein a height of a front end (124) of the enclosure portion (12) is less than a height of a rear end (125) of the enclosure portion (12), the front end (124) is opposite to the rear end (125), and the front end (124) is farther away from a front windshield (4) of the vehicle than the rear end (125).

3. The ventilation cover according to claim 2, wherein a height of the enclosure portion (12) gradually increases in a direction from the front end (124) of the enclosure portion (12) to the rear end (125) of the enclosure portion (12).

4. The ventilation cover according to claim 1, wherein the ventilation cover (1) further comprises a grid portion (13), and the grid portion (13) covers the air inlet (123) and is connected to the top end (122) of the enclosure portion (12); and
the body portion (11), the enclosure portion (12), and the grid portion (13) are an integrally formed structure.

5. The ventilation cover according to any one of claims 1 to 4, wherein the ventilation cover (1) further comprises a first dam (14), the first dam (14) is connected to the body portion (11) and divides the body portion (11) into a first part (113) and a second part (114) that are isolated from each other, the opening (111) and the enclosure portion (12) are both located in the first part (113), and the first drainage outlet (112) is located in the second part (114); and
at least one end portion (144) of the first dam (14) is located at a side edge (118) of the body portion (11) and is spaced from a rear edge (116) of the body portion (11), the side edge (118) is an edge of the body portion (11) on either side, and the rear edge (116) is an edge that is of the body portion (11) and that is close to the front windshield (4) of the vehicle.

6. The ventilation cover according to claim 5, wherein the first dam (14) runs through the body portion (11) in a length direction of the body portion (11), and two end portions (144) of the first dam (14) are respectively located at two side edges (118) of the body portion (11);
the first dam (14) comprises a first dam section (141), a second dam section (142), and a third dam section (143) that are sequentially connected in the length direction, the second dam section (142) extends in the length direction, and at least a part of the first dam section (141) and at least a part of the third dam section (143) extend in a width direction of the body portion (11); and
there are at least two first drainage outlets (112), the at least two first drainage outlets (112) are connected to the second dam section (142) and are respectively located at locations close to the first dam section (141) and the third dam section (143), and each first drainage outlet (112) is spaced from the adjacent first dam section (141) or the adjacent third dam section (143).

7. The ventilation cover according to claim 5, wherein the ventilation cover (1) further comprises two second dams (15), and the two second dams (15) are both located in the second part (114) and are respectively erected at two side edges (118) of the body portion (11);
a dam surface of each second dam (15) is connected to an adjacent end portion (144) of the first dam (14), a tail end (151) of the second dam (15) extends to the rear edge (116) of the body portion (11) in a direction away from the first dam (14), and the tail end (151) is an end that is of the second dam (15) and that is close to the front windshield (4) of the vehicle; and
a height of the second dam (15) is less than a height of the end portion (144) that is of the first dam (14) and that is connected to the second dam (15).

8. The ventilation cover according to claim 7, wherein the ventilation cover (1) further comprises two outward-extending water guide portions (17), and the two outward-extending water guide portions (17) are respectively connected to tail ends (151) of the two second dams (15) and are configured to guide water crossing the second dam (15) to a region between a fender and a shock tower of the vehicle for drainage.

9. The ventilation cover according to claim 5, wherein at least two second drainage outlets (115) are further provided on the body portion (11), the at least two second drainage outlets (115) are located in the first part (113) and are respectively located on two opposite sides of the enclosure portion (12) in a length direction of the body portion (11), and the second drainage outlet (115) is spaced from the enclosure portion (12).

10. The ventilation cover according to claim 9, wherein a height of the body portion (11) gradually decreases from the middle to two ends in the length direction; and
the at least two second drainage outlets (115) are respectively located at lowest locations at two ends of the body portion (11) in the first part (113).

11. The ventilation cover according to claim 9 or 10, wherein the ventilation cover (1) further comprises a stop portion (16), and the stop portion (16) is connected to a front edge (117) that is of the body portion (11) and that is away from the front windshield (4) of the vehicle, and is used for mounting of a sealing strip; and
there is a first spacing (161) between the stop portion (16) and the enclosure portion (12).

12. The ventilation cover according to claim 5, wherein there is a second spacing (126) between the first dam (14) and the enclosure portion (12).

13. The ventilation cover according to claim 5, wherein the ventilation cover (1) further comprises a brim portion (18), and the brim portion (18) is located above the air inlet (123) and is connected to the first dam (14).

14. A drainage and air intake system of a front compartment, wherein the system comprises an air guide member (2), a drainage member (3), and the ventilation cover (1) according to any one of claims 1 to 13; and
the air guide member (2) and the drainage member (3) are both located below the ventilation cover (1), the air guide member (2) is connected to the opening (111) on the ventilation cover (1), and the drainage member (3) is connected to the first drainage outlet (112) on the ventilation cover (1).

15. The system according to claim 14, wherein an end that is of the drainage member (3) and that is away from the first drainage outlet (112) extends in a direction close to a bottom guard of the vehicle, and is configured to guide water flowing into the first drainage outlet (112) to the bottom guard.

16. The system according to claim 14, wherein the air guide member (2) is an air guide pipe, the air guide pipe comprises a first pipe section (21) and a second pipe section (22), one end of the first pipe section (21) is connected to the opening (111), and the other end is connected to the second pipe section (22); and
the first pipe section (21) is bent relative to the second pipe section (22), and an included angle between the first pipe section (21) and the second pipe section (22) is less than 90 degrees.

17. The system according to claim 16, wherein a third drainage outlet (23) is provided on the air guide pipe, and the third drainage outlet (23) is located at a connection between the first pipe section (21) and the second pipe section (22).

18. A vehicle, wherein the vehicle comprises the ventilation cover according to any one of claims 1 to 13, or comprises the drainage and air intake system of the front compartment according to any one of claims 14 to 17.
